# EUROPEAN PATENT SPECIFICATION

(11) **EP 1 417 158 B1**
(45) Date of publication and mention of the grant of the patent: **09.05.2007**
(21) Application number: 02750008.1
(22) Date of filing: 12.07.2002
(51) Int. Cl.: C03C 17/00, C03C 17/245, C03C 17/25, C03C 17/34

(54) **PHOTOACTIVE COATING, COATED ARTICLE, AND METHOD OF MAKING SAME**
PHOTOAKTIVE BESCHICHTUNG, BESCHICHTETER GEGENSTAND UND VERFAHREN ZU DESSEN HERSTELLUNG
REVETEMENT PHOTOSENSIBLE, ARTICLE REVETU, ET PROCEDE DE FABRICATION D'UN TEL ARTICLE

(30) Priority: 13.07.2001 US 305191 P; 11.07.2002 US 193447
(43) Date of publication of application: 12.05.2004
(73) Proprietor: PPG Industries Ohio, Inc., Cleveland, OH 44111 (US)
(72) Inventor: JOHNSON, Christopher, Carmichaels, PA 15320 (US); HARRIS, Caroline, S., Pittsburgh, PA 15206 (US); GREENBERG, Charles, B., Murrysville, PA 15668 (US)
(74) Representative: polypatent
(86) International application number: PCT/US2002/022233
(87) International publication number: WO 2003/009061

(56) References cited:
- US-A- 6 037 289
- US-A- 6 103 363

## Description

### 1. Field of the Invention

The present invention relates to methods of depositing photoactive coatings on a substrate (e.g., a glass sheet or a continuous float glass ribbon), to methods of increasing the photoactivity of a coating, and to articles of manufacture prepared according to the methods.

### 2. Technical Considerations

For many substrates, e.g., glass substrates such as architectural windows, automotive transparencies, and aircraft windows, it is desirable for good visibility that the surface of the substrate is substantially free of surface contaminants, such as common organic and inorganic surface contaminants, for as long a duration as possible. Traditionally, this has meant that these surfaces are cleaned frequently. This cleaning operation is typically performed by manually wiping the surface with or without the aid of chemical cleaning solutions. This approach can be labor, time, and/or cost intensive. Therefore, a need exists for substrates, particularly glass substrates, having surfaces that are easier to clean than existing glass substrates and which reduce the need or frequency for such manual cleaning.

It is known that some semiconductor metal oxides can be incorporated into a coating to provide a photoactive (hereinafter "PA") coating. The terms "photoactive" or "photoactively" refer to the photogeneration of a hole-electron pair when illuminated by radiation of a particular frequency, usually ultraviolet ("UV") light. Above a certain minimum thickness, these PA coatings are typically photocatalytic (hereinafter "PC"). By "photocatalytic" is meant a coating having self-cleaning properties, i.e., a coating that upon exposure to certain electromagnetic radiation, such as UV, interacts with organic contaminants on the coating surface to degrade or decompose the organic contaminants. In addition to their self-cleaning properties, these PC coatings are also typically hydrophilic, i.e. water wetting with a contact angle with water of generally less than 20 degrees. The hydrophilicity of the PC coatings helps reduce fogging, i.e., the accumulation of water droplets on the coating, which can decrease visible light transmission and visibility through the coated substrate.

Generally, the thicker these PC coatings are made the better the photoactivity, i.e., the shorter the time to at least break down or decompose organic contaminants on the coating. In order to increase the photocatalytic activity of the coating, photocatalytic enhancing co-catalysts have been incorporated in the coating, such as reported in U.S. Patent No. 6,603,363. Whether these known co-catalysts increase the photocatalytic activity of a coating typically depends, at least in part, on where in the coating structure the co-catalyst is located, i.e., the surface of the coating or in the bulk of the coating. The location of the co-catalyst in the coating is in turn dependent upon the method of depositing the coating. For example, in U.S. Patent No. 6,603,363, the photocatalytic activity of a titanium dioxide coating is increased by covering the titanium dioxide coating with a thin metal layer of platinum, rhodium, silver, or palladium. U.S. Patent No. 5,854,169 discloses increasing the photocatalytic activity of a titanium dioxide coating by the addition of co-catalysts containing palladium, platinum, rhodium, ruthenium, tungsten, molybdenum, gold, silver, or copper. However, these co-catalysts are typically deposited near the coating surface, not incorporated into the bulk of the coating, making the deposition process more difficult and time consuming.

In order to achieve the previously desired levels of coating thickness, photocatalytic activity, surface roughness, and coating porosity, many PC coatings have been deposited by sol-gel techniques. In a typical sol-gel process, an uncrystallized colloidal suspension (the sol) is coated onto a substrate at or about room temperature and forms a gel, which is then heated to form a crystallized coating. For example, U.S. Patent No. 6,013,372 discloses a hydrophilic, photocatalytic, self-cleaning coating formed by blending particles of photocatalyst in a layer of metal oxide and applying the blend to a substrate by a sol-gel process.

However, conventional sol-gel coating methods are not economically or practically compatible with certain application conditions or substrates. For example, in a conventional float glass process, the float glass ribbon in the molten metal bath can be too hot to accept the sol due to evaporation or chemical reaction of the solvent used in the sol. Conversely, when the sol is applied to substrates that are below a specific temperature for the formation of crystalline forms of the catalyst, the sol-coated substrates are reheated to a temperature sufficient to form the crystallized photocatalyst. Such cooling and reheating operations can require a substantial investment in equipment, energy, and handling costs, and can significantly decrease production efficiency. Further, reheating a sodium containing substrate, such as soda-lime-silica glass, to a sufficient temperature to form the crystallized photocatalyst increases the opportunity for sodium ions in the substrate to migrate into the coating. This migration can result in what is conventionally referred to as "sodium ion poisoning" of the deposited coating. The presence of these sodium ions can reduce or destroy the photocatalytic activity of the PC coating. Moreover, the sol-gel method typically produces thick coatings, e.g., several microns thick, which can have an adverse affect on the optical and/or aesthetic properties of coated articles. Typically, as the thickness of the PC coating increases, the light transmittance and the reflectance of the coating go through a series of minimums and maximums due to optical interference effects. The reflected and transmitted color of the coating also varies due to these optical effects. Thus, coatings thick enough to provide the desired self-cleaning properties can have undesirable optical characteristics.

Therefore, it would be advantageous to provide a method of depositing a PA coating with photocatalytic enhancing co-catalysts that is compatible with a conventional float glass process and/or to provide an article made in accordance with the method, which method and/or article reduce or eliminate at least some of the above described drawbacks.

### SUMMARY OF THE INVENTION

In one aspect of the invention, a method of forming at least a PA coating includes depositing a precursor composition over at least a portion of a substrate surface. The precursor composition includes a photoactive coating precursor material, e.g., a metal oxide or semiconductor metal oxide precursor material. In one embodiment the precursor material is a titania precursor material. The precursor composition also includes at least one other precursor material having at least one photoactivity enhancing material. In one embodiment, the photoactivity enhancing material is at least one metal selected from boron, strontium, zirconium, lead, barium, calcium, hafnium, lanthanum, or any mixtures or combinations thereof or any materials containing one or more of the above metals. A sufficient amount of the other precursor material is added to the composition such that a molar ratio of the selected metal to titanium in the applied photocatalytic coating is in the range of about 0.001 to about 0.05. The at least PA coating is one that results in at least hydrophilicity, e.g., photoactive hydrophilicity, of the coating on the substrate and can also result in photocatalytic activity sufficient to be a PC coating.
A further method of forming a photoactive coating comprises depositing a precursor composition by chemical vapor deposition over at least a portion of a float glass ribbon in a molten metal bath. The precursor composition comprises a photoactive coating precursor material and at least one other precursor material comprising a dopant that increases the photoactivity of the photoactive coating over that of the photoactive coating without the dopant.

Another method of forming at least a PA coating includes depositing a precursor composition over at least a portion of a substrate surface. The precursor composition includes at least one titania precursor material. In one embodiment, the titania precursor material includes titanium and oxygen, e.g., at least one titanium alkoxide, such as but not limited to titanium methoxide, titanium ethoxide, titanium propoxide, titanium butoxide, and the like or isomers thereof, such as but not limited to titanium isopropoxide. In another embodiment, the titania precursor material comprises titanium tetrachloride. In one embodiment, the precursor composition also includes at least one other organometallic precursor material having at least one metal selected from boron, strontium, zirconium, lead, barium, calcium, hafnium, lanthanum, or mixtures or combinations thereof. In one embodiment, the other precursor material can be an oxide, alkoxide, or mixture thereof. Exemplary organometallic precursor materials include, but are not limited to, trialkyl borate, strontium alkoxide, alkyllead, zirconium alkylalkoxide, lanthanum alkoxide, strontium ethoxide, strontium-2-ethylhexanoate, strontium hexafluoroacethylacetonate, strontium isopropoxide, strontium methoxide, strontium tantalum ethoxide, strontium titanium isopropoxide, triethyl borate (also referred to as triethoxyborane or toric acid triethylester), other borates such as tri-n-butyl borate, triisopropylborate, tetra-n-butyl lead, zirconium-2-methyl-2-butoxide, and lanthanum isopropoxide, and mixtures thereof.

A further method of depositing a.photoactive, e.g., photocatalytic and/or photoactively hydrophilic, coating over a substrate includes positioning a chemical vapor deposition coating device over a float glass ribbon in a float chamber and directing a precursor composition from the coating device onto the ribbon. The precursor composition includes a titania precursor material and at least one other precursor material having at least one metal selected from boron, strontium, lead, barium, calcium, hafnium, lanthanum, or any mixtures or combinations thereof. Sufficient other precursor material is added to the composition such that a molar ratio of the selected metal to titanium in the applied photocatalytic coating is in the range of about 0.001 to about 0.05. The substrate is heated to a temperature sufficient to decompose the precursor materials to form the photoactive coating.

A method is provided for increasing the photocatalytic activity of a titania coating. The method includes adding to the titania coating at least one metal selected from boron, strontium, zirconium, lead, barium, calcium, hafnium, and lanthanum, such that a molar ratio of the selected metal to titanium in the photocatalytic coating is in the range of about 0.001 to about 0.05.

A method for forming a photocatalytic coating includes depositing a precursor composition over at least a portion of a substrate. The precursor composition includes titanium tetrachloride, a source of organic oxygen, and a boron-containing precursor material.

An article of the invention includes a substrate having at least one surface and a photocatalytic coating deposited over at least a portion of the substrate surface. The photocatalytic coating includes titania and at least one additional material comprising at least one metal selected from boron, strontium, zirconium, lead, barium, calcium, hafnium, lanthanum, and any mixtures or combinations thereof. The additional material is present in the coating in an amount such that a molar ratio of the selected metal to titanium in the photocatalytic coating is in the range of about 0.001 to about 0.05.

### DESCRIPTION OF THE DRAWINGS

Fig. 1 is a sectional view (not to scale) of a portion of a substrate having a photoactive coating of the invention deposited thereon;

Fig. 2 is a side view (not to scale) of a coating process for applying a photoactive metal oxide coating of the invention onto a glass ribbon in a molten metal bath for a float glass process; and

Fig. 3 is a side view (not to scale) of an insulating glass unit incorporating features of the invention.

### DESCRIPTION OF THE INVENTION

As used herein, spatial or directional terms, such as "inner", "outer", "above", "below", "top", "bottom", and the like, relate to the invention as it is shown in the drawing figures. However, it is to be understood that the invention can assume various alternative orientations and, accordingly, such terms are not to be considered as limiting. Further, as used herein, the terms "deposited over" or "provided over" mean deposited or provided on but not necessarily in contact with the surface. For example, a coating "deposited over" a substrate does not preclude the presence of one or more other coating films of the same or different composition located between the deposited coating and the substrate. Additionally, all percentages disclosed herein are "by weight" unless indicated to the contrary. All photocatalytic activity values discussed herein are those determined by the conventional stearic acid test described in U.S. Patent No. 6,027,766. All root mean square roughness values are those determinable by atomic force microscopy by measurement of the root mean square (RMS) roughness over a surface area of one square micrometer. Additionally, all references "incorporated by reference" herein are to be understood as being incorporated in their entirety.

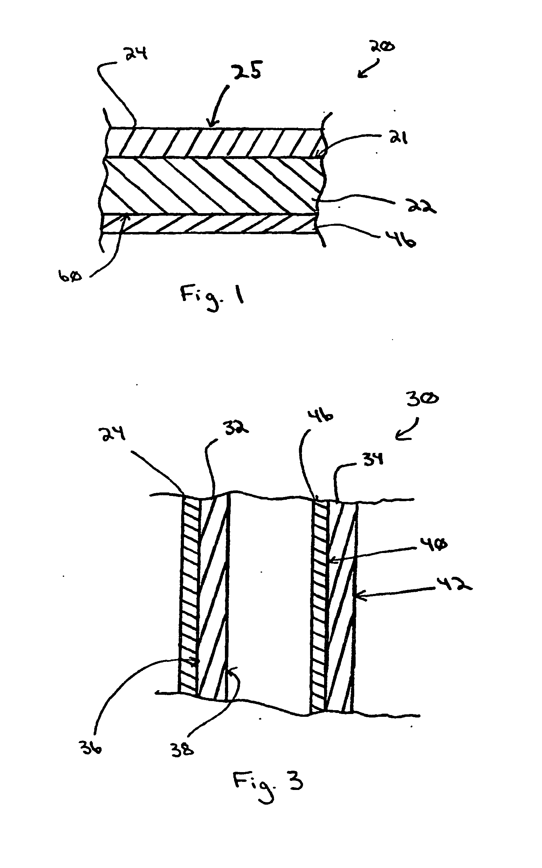

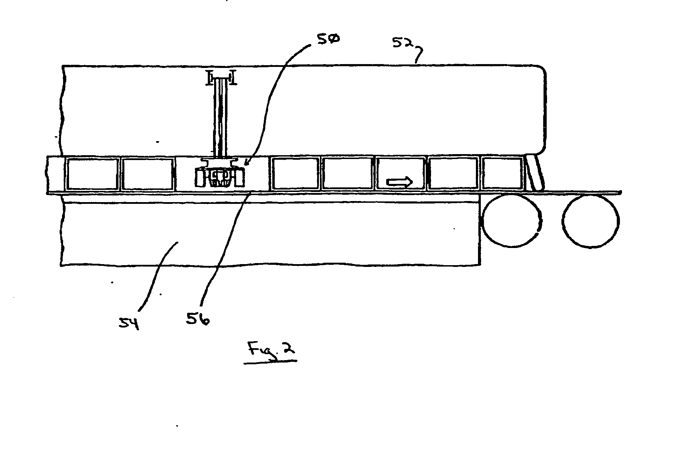

Referring now to Fig. 1, there is shown an article 20 having features of the present invention. The article 20 includes a substrate 22 having a first surface 21 and a second surface 60. The substrate 22 is not limiting to the invention and can be of any desired material having any desired characteristics, such as opaque or transparent substrates. By "transparent" is meant having a visible light transmittance of greater than 0% to 100%. By "opaque" is meant having a visible light transmittance of 0%. By "visible light" is meant electromagnetic energy having a wavelength in the range of 400 nanometers (nm) to 800 nm. Examples of suitable substrates include, but are not limited to, plastic substrates (such as polyacrylates, polycarbonates, and polyethyleneterephthalate (PET)); metal substrates; enameled or ceramic substrates; glass substrates; or mixtures or combinations thereof. For example, the substrate 22 can be conventional untinted soda-lime-silica-glass, i.e. "clear glass", or can be tinted or otherwise colored glass, borosilicate glass, leaded glass, tempered, untempered, annealed, or heat strengthened glass. The glass can be of any type, such as conventional float glass, flat glass, or a float glass ribbon, and can be of any composition having any optical properties, e.g., any value of visible transmission, ultraviolet transmission, infrared transmission, and/or total solar energy transmission. Types of glass suitable for the practice of the invention are described, for example but not to be considered as limiting, in United States Patent Nos. 4,746,347; 4,792,536; 5,240,886; 5,385,872; and 5,393,593. For example, the substrate 22 can be a float glass ribbon, a glass pane of an architectural window, a skylight, one pane of an insulating glass unit, a mirror, a shower door, glass furniture (e.g., glass tabletop or glass cabinet), or a ply for a conventional automotive windshield, side or back window, sun roof, or an aircraft transparency, just to name a few.

A photoactively-enhanced (hereinafter "PE") coating 24 of the invention can be deposited over at least a portion of the substrate 22, e.g., over all or a portion of a major surface of the substrate 22, such as over all or a portion of the surface 21 or the surface 60. In the illustrated embodiment, the PE coating 24 is shown deposited on the surface 21. As used herein, the term "photoactively enhanced" refers to a material or coating which is photoactive and which includes at least one co-catalyst or dopant that acts to increase the photoactivity of the coating over that of the coating without the co-catalyst. The PE coating 24 can be photocatalytic, photoactively hydrophilic, or both. By "photoactively hydrophilic" is meant a coating in which the contact angle of a water droplet on the coating decreases with time as a result of exposure of the coating to electromagnetic radiation. For example, the contact angle can decrease to a value less than 15°, such as less than 10°, and can become superhydrophilic, e.g., decreases to less than 5°, after sixty minutes of exposure to ultraviolet radiation from a light source sold under the trade name UVA 340 from the Q-Panel Company of Cleveland, Ohio, having an intensity of 24 W/m² at the PE coating surface. Although photoactive, the coating 24 may not necessarily be photocatalytic to the extent that it is self-cleaning, i.e., may not be sufficiently photocatalytic to decompose organic material like grime on the coating surface in a reasonable or economically useful period of time.

As described above, the PE coating 24 includes (1) a photoactive coating material and (2) a photoactivity enhancing co-catalyst or dopant. The photoactive coating material (1) can include at least one metal oxide, such as but not limited to, one or more metal oxides or semiconductor metal oxides, such as titanium oxides, silicon oxides, aluminum oxides, iron oxides, silver oxides, cobalt oxides, chromium oxides, copper oxides, tungsten oxides, zinc oxides, zinc/tin oxides, strontium titanate, and mixtures thereof. The metal oxide can include oxides, super-oxides or sub-oxides of the metal. In one embodiment, the metal oxide is crystalline or at least partially crystalline. In one exemplary coating of the invention, the photoactive coating material is titanium dioxide. Titanium dioxide exists in an amorphous form and three crystalline forms, i.e., the anatase, rutile and brookite crystalline forms. The anatase phase titanium dioxide is particularly useful because it exhibits strong photoactivity while also possessing excellent resistance to chemical attack and excellent physical durability. However, the rutile phase or combinations of the anatase and/or rutile phases with the brookite and/or amorphous phases are also acceptable for the present invention.

The photoactivity enhancing co-catalyst (2) can be any material that increases the photoactivity, e.g., photocatalytic activity and/or photoactive hydrophilicity, of the resultant coating over that of the coating without the co-catalyst. In one exemplary embodiment, the co-catalyst includes at least one material having at least one component selected from boron, strontium, zirconium, lead, barium, calcium, hafnium, lanthanum and/or mixtures or combinations thereof. The co-catalyst is present in the PE coating 24 in an amount sufficient to increase the photoactivity, e.g., photocatalytic activity and/or photoactive hydrophilicity of the coating, without adversely impacting the desired coating performance, e.g., reflectivity, transmittance, color, etc. For example, in a PE coating 24 comprising primarily anatase titanium dioxide, the co-catalyst can be present in an amount such that a molar ratio of the selected co-catalyst (e.g., the metal of the co-catalyst) to titanium in the PE coating 24 is in the range of 0.001 to 0.05, e.g., 0.005 to 0.03, e.g., 0.01 ± 0.005. Additionally, in the practice of the invention, the co-catalyst does not necessarily have to be concentrated at or near the coating surface 21 but, rather, can be deposited in such a manner that it is dispersed or incorporated into the bulk of the coating 24.

The PE coating 24 should be sufficiently thick so as to provide an acceptable level of photoactivity, e.g., photocatalytic activity and/or photoactive hydrophilicity, for a desired purpose. There is no absolute value which renders the PE coating 24 "acceptable" or "unacceptable" because whether a PE coating 24 has an acceptable level of photoactivity varies depending largely on the purpose and conditions under which the PE coated article is being used and the performance standards selected to match that purpose. However, the thickness of the PE coating 24 to achieve photoactive hydrophilicity can be much less than is needed to achieve a commercially acceptable level of photocatalytic self-cleaning activity. For example, in one embodiment the PE coating 24 can have a thickness in the range of 10 Å to 5000 Å, where thicker coatings in this range can have photocatalytic self-cleaning activity for at least some period of time as well as hydrophilicity. As the coatings get thinner in this range, photocatalytic self-cleaning activity typically decreases in relation to performance and/or duration. As coating thickness decreases in such ranges as 50 Å to 3000 Å, e.g., 100 Å to 1000 Å, e.g., 200 Å to 600 Å, e.g., 200 Å to 300 Å, photocatalytic self-cleaning activity may be immeasurable but photoactive hydrophilicity can still be present in the presence of selected electromagnetic radiation.

In another aspect of the invention, the outer surface 25 of the PE coating 24 (i.e. the surface facing away from the substrate) can be much smoother than previously known self-cleaning coatings while still maintaining photoactive hydrophilicity and/or photocatalytic activity. For example, the PE coating 24, in particular the top or outer surface 25 of the coating, can have an RMS surface roughness of less than 5 nm even for thin coatings in the above ranges, such as 200 Å to 300 Å, e.g., less than 4.9 nm, e.g., less than 4 nm, e.g., less than 3 nm, e.g., less than 2 nm, e.g., less than 1 nm e.g., 0.3 nm to 0.7 nm.

In a still further aspect of the invention, the PE coating 24 can be made denser than previously known hydrophilic, self-cleaning coatings. For example, the PE coating 24 can be substantially non-porous. By "substantially non-porous" is meant that the coating is sufficiently dense that the coating can withstand a conventional hydrofluoric acid test in which a drop of 0.5 weight percent (wt. %) aqueous hydrofluoric acid (HF) solution is placed on the coating and covered with a watch glass for 8 minutes (mins) at room temperature. The HF is then rinsed off and the coating visually examined for damage. An alternative HF immersion test is described in Industrial Engineering Chemistry & Research, Vol. 40, No. 1, page 26, 2001 by Charles Greenberg, herein incorporated by reference. The denser PE coating 24 of the invention provides more protection to the underlying substrate against chemical attack than previous more porous self-cleaning coatings and also is harder and more scratch resistant than previous sol-gel applied self-cleaning coatings.

The PE coating 24 can be deposited directly on, i.e., in surface contact with, the surface 21 of the substrate 22 as shown in Fig. 1. Even with a sodium-containing substrate, such as soda-lime-silica glass, thin PE coatings 24 of the invention, e.g., less than 1000Å, should not be rendered non-photoactive by sodium in the substrate when the coating is applied by the in-bath method described below. Therefore, an easier to clean soda-lime-silica glass can be made without a sodium barrier layer between the glass and the PE coating 24 of the invention. Optionally, such a conventional sodium barrier layer could be used.

Alternatively, one or more other layers or coatings can be interposed between the PE coating 24 and the substrate 22. For example, the PE coating 24 can be an outer or the outermost layer of a multilayer stack of coatings present on substrate 22 or the PE coating 24 can be embedded as one of the layers of the stack other than the outermost layer within such a multi-layer stack. By "an outer layer" is meant a layer receiving sufficient exciting electromagnetic radiation, e.g., ultraviolet radiation, to provide the coating with sufficient photoactivity to be at least photoactively hydrophilic if not necessarily photocatalytic. In one embodiment, the PE coating 24 is the outermost coating on the substrate 22.

A PE coating 24 of the invention can be formed on the substrate 22 by any conventional method, such as by one or more of spray pyrolysis, chemical vapor deposition (CVD), or magnetron sputtered vacuum deposition (MSVD). In the spray pyrolysis method, an organic or metal-containing precursor composition having (1) a metal oxide precursor material, e.g., a titania precursor material, and (2) at least one photoactivity enhancing precursor material, i.e., a co-catalyst material, such as an organometallic precursor material, is carried in an aqueous suspension, e.g., an aqueous solution, and is directed toward.the surface of the substrate 22 while the substrate 22 is at a temperature high enough to cause the precursor composition to decompose and to form a PE coating 24 on the substrate 22. In a CVD method, the precursor composition is carried in a carrier gas, e.g., nitrogen gas, and directed toward the substrate 22. In the MSVD method, one or more metal-containing cathode targets are sputtered under a reduced pressure in an inert or oxygen-containing atmosphere to deposit a sputter coating over substrate 22. The substrate 22 can be heated during or after coating to cause crystallization of the sputter coating to form the PE coating 24. For example, one cathode can be sputtered to provide the metal oxide precursor material (1) and another cathode can be sputtered to provide the co-catalyst material (2). Alternatively, a single cathode already doped with the desired co-catalyst can be sputtered to form the PE coating 24.

Each of the methods has advantages and limitations depending upon the desired characteristics of the PE coating 24 and the type of glass fabrication process. For example, in a conventional float glass process molten glass is poured onto a pool of molten metal, e.g., tin, in a molten metal (tin) bath to form a continuous float glass ribbon. Temperatures of the float glass ribbon in the tin bath generally range from 1203°C (2200°F) at the delivery end of the bath to 592°C (1100°F) at the exit end of the bath. The float glass ribbon is removed from the tin bath and annealed, i.e., controllably cooled, in a lehr before being cut into glass sheets of desired length and width. The temperature of the float glass ribbon between the tin bath and the annealing lehr is generally in the range of 480°C (896°F) to 580°C (1076°F) and the temperature of the float glass ribbon in the annealing lehr generally ranges from 204°C (400°F) to 557°C (1035°F) peak. U.S. Patent Nos. 4,466,562 and 4,671,155 provide a discussion of the float glass process.

The CVD and spray pyrolysis methods may be preferred over the MSVD method in a float glass process because they are more compatible with coating continuous substrates, such as float glass ribbons, at elevated temperatures. Exemplary CVD and spray pyrolysis coating methods are described in U.S. Patent Nos. 4,344,986; 4,393,095; 4,400,412; 4,719,126; 4,853,257; and 4,971,843.

In the practice of the invention, one or more CVD coating apparatus can be employed at several points in the float glass ribbon manufacturing process. For example, CVD coating apparatus can be employed as the float glass ribbon travels through the tin bath, after it exits the tin bath, before it enters the annealing lehr, as it travels through the annealing lehr, or after it exits the annealing lehr. Because the CVD method can coat a moving float glass ribbon yet withstand the harsh environments associated with manufacturing the float glass ribbon, the CVD method is particularly well suited to provide the PE coating 24 on the float glass ribbon in the molten tin bath. U.S. Patent Nos. 4,853,257; 4,971,843; 5,536,718; 5,464,657; 5,714,199; and 5,599,387, describe CVD coating apparatus and methods that can be used in the practice of the invention to coat a float glass ribbon in a molten tin bath.

For example, as shown in Fig. 2, one or more CVD coaters 50 can be located in the tin bath 52 above the molten tin pool 54. As the float glass ribbon 56 moves through the tin bath 52, the vaporized precursor composition (i.e., the photoactive coating precursor material (1), e.g., metal oxide precursor material, and the photoactivity-enhancing co-catalyst material (2), e.g., organometallic precursor material), can be added to a carrier gas and directed onto the top surface 21 of the ribbon 56. The precursor composition decomposes to form a PE coating 24 of the invention. The co-catalyst material (2) can be at least partially soluble in the coating precursor material (1), such as fully soluble in the coating precursor material (1) under the desired deposition conditions. Any desired amount of the co-catalyst material (2) to achieve a desired amount of photoactivity, e.g., photoactive hydrophilicty and/or photocatalytic activity, can be added to, mixed into, or solubilized in the coating precursor material (1). For example, the co-catalyst material can be an organometallic material, such as an alkoxide material (e.g., a transition metal alkoxide) having a boiling point of less than 200°C. Alternatively, the two separate precursors can be separately vaporized and combined.

Exemplary coating precursor materials (1) (e.g., titania precursor materials) that can be used in the practice of the present invention to form titanium dioxide PE coatings 24 by the CVD method include, but are not limited to, oxides, sub-oxides, or super-oxides of titanium. In one embodiment, the precursor material (1) can be one or more titanium alkoxides, such as but not limited to titanium methoxide, titanium ethoxide, titanium propoxide, titanium butoxide, and the like or isomers thereof. Exemplary precursor materials suitable for the practice of the invention include, but are not limited to, titanium tetraisopropoxide (Ti(OC₃H₇)₄) (hereinafter "TTIP") and titanium tetraethoxide (Ti(OC₂H₅)₄) (hereinafter "TTEt"). Alternatively, the titania precursor material (1) can be titanium tetrachloride.

The co-catalyst (e.g., dopant) material can be any material that enhances or affects the photoactivity, e.g., photocatalytic activity and/or photoactive hydrophilicity, of the resultant coating in a desired manner. The co-catalyst material can include one or more of boron, strontium, zirconium, lead, barium, calcium, hafnium, lanthanum and/or any mixtures or combinations thereof. For example, the co-catalyst material can include one or more of trialkyl borate, strontium alkoxide, alkyllead, zirconium alkylalkoxide, lanthanum alkoxide, strontium ethoxide, strontium-2-ethylhexanoate, strontium hexafluoroacethylacetonate, strontium isopropoxide, strontium methoxide, strontium tantalum ethoxide, strontium titanium isopropoxide, triethyl borate (also referred to as triethoxyborane or toric acid triethyl ester), other borates such as tri-n-butyl borate, triisopropyl borate, tetra-n-butyl lead, zirconium-2-methyl-2-butoxide, lanthanum isopropoxide, and/or any mixtures or combinations thereof. Exemplary carrier gases that can be used in the CVD method of the invention include but are not limited to air, nitrogen, oxygen, ammonia, and mixtures thereof. The concentration of the precursor composition in the carrier gas can vary depending upon the specific precursor composition used. However, it is anticipated that for coatings having a thickness of about 200 Å, the concentration of precursor composition in the carrier gas will typically be in the range of 0.01 volume % to 0.1 volume %, e.g., 0.01 volume % to 0.06 volume %, e.g., 0.015 volume % to 0.06 volume %; e.g., 0.019 volume % to 0.054 volume %.

For the CVD method (as well as the spray pyrolysis method discussed below), the temperature of the substrate 22 (such as a float glass ribbon 56) during formation of the PE coating 24 thereon should be within the range which will cause the metal containing precursor composition to decompose and form a coating having a desired amount of photoactivity, e.g., photocatalytic activity, photoactive hydrophilicity, or both. The lower limit of this temperature range is largely affected by the decomposition temperature of the selected precursor composition. For the above listed titanium-containing precursors, the lower temperature limit of the substrate 22 to provide sufficient decomposition of the precursor composition is generally in the range of 400°C (752°F) to 500°C (932°F) . The upper limit of this temperature range can be affected by the method of coating the substrate. For example, where the substrate 22 is a float glass ribbon 56 and the PE coating 24 is applied to the float glass ribbon 56 in the molten tin bath 52 during manufacture of the float glass ribbon 56, the float glass ribbon 56 can reach temperatures in excess of 1000°C (1832°F). The float glass ribbon 56 can be attenuated or sized (e.g. stretched or compressed) at temperatures above 800°C (1472°F). If the PE coating 24 is applied to the float glass ribbon 56 before or during attenuation, the PE coating 24 can crack or crinkle as the float glass ribbon 56 is stretched or compressed respectively. Therefore, the PE coating 24 can be applied when the float glass ribbon 56 is dimensionally stable (except for thermal contraction with cooling), e.g., below 800°C (1472°F) for soda lime silica glass, and the float glass ribbon 56 is at a temperature to decompose the metal-containing precursor, e.g., above 400°C (752°F).

For spray pyrolysis, U.S. Patent Nos. 4,719,126; 4,719,127; 4,111,150; and 3,660,061 describe spray pyrolysis apparatus and methods that can be used with a conventional float glass ribbon manufacturing process. While the spray pyrolysis method like the CVD method is well suited for coating a moving float glass ribbon, the spray pyrolysis has more complex equipment than the CVD equipment and is usually employed between the exit end of the tin bath and the entrance end of the annealing lehr.

Exemplary metal-containing precursor compositions that can be used in the practice of the invention to form PE coatings by the spray pyrolysis method include relatively water insoluble organometallic reactants, specifically metal acetylacetonate compounds, which are jet milled or wet ground to a particle size of less than 10 microns and suspended in an aqueous medium by the use of a chemical wetting agent. A suitable metal acetylacetonate precursor material to form a titanium dioxide containing PE coating is titanyl acetylacetonate (TiO(C₅H₇O₂)₂). A photoactivity-enhancing co-catalyst, such as described above, can be mixed with or solubilized into the acetylacetonate precursor material. In one embodiment, the relative concentration of the metal acetylacetonate and co-catalyst precursor materials in the aqueous suspension ranges from 5 to 40 weight percent of the aqueous suspension. The wetting agent can be any relatively low foaming surfactant, including anionic, nonionic or cationic compositions. In one embodiment, the surfactant is nonionic. The wetting agent is typically added at 0.24% by weight, but can range from 0.01% to 1% or more. The aqueous medium can be distilled or deionized water. Aqueous suspensions for pyrolytic deposition of metal-containing films are described in U.S. Patent No. 4,719,127 particularly at column 2, line 16 to column 4, line 48.

As will be appreciated by those skilled in the art, the bottom surface 60 of the float glass ribbon resting directly on the molten tin (commonly referred to as the "tin side") has diffused tin in the surface which provides the tin side with a pattern of tin absorption that is different from the opposing surface 21 not in contact with the molten tin (commonly referred to as "the air side"). The PE coating of the invention can be formed on the air side of the float glass ribbon while it is supported on the tin by the CVD method as described above, on the air side of the float glass ribbon after it leaves the tin bath by either the CVD or spray pyrolysis methods, and/or on the tin side of the float glass ribbon after it exits the tin bath by the CVD method.

As an alternative to including oxygen in the atmosphere of the tin bath to form oxide coatings, the precursor composition can itself include one or more sources of organic oxygen. The organic oxygen can be, for example, an ester or carboxylate ester, such as an alkyl ester having an alkyl group with a β-hydrogen. Suitable esters can be alkyl esters having a C₂ to C₁₀ alkyl group. Exemplary esters which can be used in the practice of the invention are described in WO 00/75087, herein incorporated by reference.

With respect to MSVD, U.S. Patent Nos. 4,379,040; 4,861,669; 4,900,633; 4,920,006; 4,938,857; 5,328,768; and 5,492,750, describe MSVD apparatus and methods to sputter coat metal oxide films on a substrate, including a glass substrate. The MSVD process is not generally compatible with providing a PE coating over a float glass ribbon during its manufacture because, among other things, the MSVD process requires reduced pressure during the sputtering operation, which is difficult to form over a continuous moving float glass ribbon. However, the MSVD method is acceptable to deposit the PE coating 24 on the substrate 22, e.g., a glass sheet. The substrate 22 can be heated to temperatures in the range of 400°C (752°F) to 500°C (932°F) so that the MSVD sputtered coating on the substrate crystallizes during the deposition process thereby eliminating a subsequent heating operation. Heating the substrate during sputtering is not a generally preferred because the additional heating operation during sputtering may decrease throughput. Alternatively, the sputter coating can be crystallized within the MSVD coating apparatus directly and without post heat treatment by using a high-energy plasma, but again because of its tendency to reduce throughput through an MSVD coater, this may not be preferred.

An exemplary method to provide a PE coating (especially a PE coating of 300 Å or less and having an RMS surface roughness of 2 nm or less) using the MSVD method is to sputter a co-catalyst containing coating on the substrate, remove the coated substrate from the MSVD coater, and thereafter heat-treat the coated substrate to crystallize the sputter coating. For example, but not limiting to the invention, in one embodiment a target of titanium metal doped with at least one photoactivity-enhancing co-catalyst material selected from boron, strontium, zirconium, lead, barium, calcium, hafnium, lanthanum, and/or mixtures thereof can be sputtered in an argon/oxygen atmosphere having 5-50%, such as 20% oxygen, at a pressure of 5-10 millitorr to sputter deposit a doped titanium dioxide coating of desired thickness on the substrate 22. The coating as deposited is not crystallized. The coated substrate is removed from the coater and heated to a temperature in the range of 400°C (752°F) to 600°C (1112°F) for a time period sufficient to promote formation of the crystalline form of titanium dioxide to render photoactivity. Generally at least an hour at a temperature in the range of 400°C (752°F) to 600°C (1112°F) is sufficient. Where the substrate 22 is a glass sheet cut from a float glass ribbon, the PE coating 24 can be sputter deposited on the air side and/or the tin side.

The substrate 22 having the PE coating 24 deposited by the CVD, spray pyrolysis or MSVD methods can be subsequently subjected to one or more post-coating annealing operations. As may be appreciated, the time and temperatures of the anneal can be affected by several factors, including the makeup of substrate 22, the makeup of PE coating 24, the thickness of the PE coating 24, and whether the PE coating 24 is directly in contact with the substrate 22 or is one layer of a multilayer stack on substrate 22.

Whether the PE coating 24 is provided by the CVD process, the spray pyrolysis process, or the MSVD process, where the substrate 22 includes sodium ions that can migrate from the substrate 22 into the PE coating 24 deposited on the substrate 22, the sodium ions can inhibit or destroy the photoactivity, e.g., photocatalytic activity and/or photoactive hydrophilicity, of the PE coating 24 by forming inactive compounds while consuming titanium, e.g., by forming sodium titanates or by causing recombination of photoexcited charges. Therefore, a conventional sodium ion diffusion barrier (SIDB) layer can be deposited over the substrate before deposition of the PE coating 24. A suitable SIDB layer is discussed in detail in U.S. Patent No. 6,027,766, herein incorporated by reference, and will not be discussed in detail herein. With post-coating heating, a sodium barrier layer for sodium containing substrates, such as soda-lime-silica glass, can be utilized. For applying the PE coating 24 of the invention in a molten metal bath, the sodium barrier layer is optional.

The PE coatings 24 of the present invention can be photoactive, e.g., photocatalytic and/or photoactively hydrophilic, upon exposure to electromagnetic radiation within the photoabsorption band of the coating. By "photoabsorption band" is meant the range of electromagnetic radiation absorbed by a material to render the material photoactive. In one embodiment, the coating 24 is photoactive when exposed to electromagnetic radiation in the ultraviolet range, e.g., 300nm to 400 nm, of the electromagnetic spectrum. Sources of ultraviolet radiation include natural sources, e.g., solar radiation, and artificial sources such as a black light or an ultraviolet light source such as the UVA-340 light source.

As shown in Fig. 1, in addition to the PE coating 24 of the invention, one or more functional coatings 46 can be deposited on or over the substrate 22. For example, a functional coating 46 can be deposited over the major surface 60 of the substrate 22 that is opposite the surface 21. As used herein, the term "functional coating" refers to a coating which modifies one or more physical properties of the substrate on which it is deposited, e.g., optical, thermal, chemical or mechanical properties, and is not intended to be removed from the substrate during subsequent processing. The functional coating 46 can have one or more functional coating films of the same or different composition or functionality. As used herein, the terms "layer" or "film" refer to a coating region of a desired or selected coating composition. The film can be homogeneous, non-homogeneous, or have a graded compositional change. A film is "homogeneous" when the outer surface or portion (i.e., the surface or portion farthest from the substrate), the inner surface or portion (i.e., the surface or portion closest to the substrate) and the portion between the outer and inner surfaces have substantially the same composition. A film is "graded" when the film has a substantially increasing fraction of one or more components and a substantially decreasing fraction of one or more other components when moving from the inner surface to the outer surface or vice versa. A film is "non-homogeneous" when the film is other than homogeneous or graded. A "coating" is composed of one or more "films".

The functional coating 46 can be an electrically conductive coating, such as, for example, an electrically conductive heated window coating as disclosed in U.S. Patent Nos. 5,653,903 and 5,028,759, or a single-film or multi-film coating capable of functioning as an antenna. Likewise, the functional coating 46 can be a solar control coating, for example, a visible, infrared or ultraviolet energy reflecting or absorbing coating. Examples of suitable solar control coatings are found, for example, in U.S. Patent Nos. 4,898,789; 5,821,001; 4,716,086; 4,610,771; 4,902,580; 4,716,086; 4,806,220; 4,898,790; 4,834,857; 4,948,677; 5,059,295; and 5,028,759, and also in U.S. Patent Application No. 09/058,440. Similarly, the functional coating 46 can be a low emissivity coating. "Low emissivity coatings" allow visible wavelength energy, e.g., 400 nm to 780 nm, to be transmitted through the coating but reflect longer-wavelength solar infrared energy and/or thermal infrared energy and are typically intended to improve the thermal insulating properties of architectural glazings. By "low emissivity" is meant emissivity less than 0.4, such as less than 0.3, e.g., less than 0.2. Examples of low emissivity coatings are found, for example, in U.S. Patent Nos. 4,952,423 and 4,504,109 and British reference GB 2,302,102. The functional coating 46 can be a single layer or multiple layer coating and can comprise one or more metals, non-metals, semi-metals, semiconductors, and/or alloys, compounds, composites, combinations, or blends thereof. For example, the functional coating 46 can be a single layer metal oxide coating, a multiple layer metal oxide coating, a non-metal oxide coating, or a multiple layer coating.

Examples of suitable functional coatings for use with the invention are commercially available from PPG Industries, Inc. of Pittsburgh, Pennsylvania under the SUNGATE® and SOLARBAN® families of coatings. Such functional coatings typically include one or more anti-reflective coating films comprising dielectric or anti-reflective materials, such as metal oxides or oxides of metal alloys, which are typically transparent to visible light. The functional coating 46 can also include infrared reflective films comprising a reflective metal, e.g., a noble metal such as gold, copper or silver, or combinations or alloys thereof, and can further comprise a primer film or barrier film, such as titanium, as is known in the art, located over and/or under the metal reflective layer.

The functional coating 46 can be deposited in any conventional manner, such as but not limited to magnetron sputter vapor deposition (MSVD), chemical vapor deposition (CVD), spray pyrolysis (i.e., pyrolytic deposition), atmospheric pressure CVD (APCVD), low-pressure CVD (LPCVD), plasma-enhanced CVD (PEVCD), plasma assisted CVD (PACVD), thermal or electron-beam evaporation, cathodic arc deposition, plasma spray deposition, and wet chemical deposition (e.g., sol-gel, mirror silvering etc.). For example, U.S. Patent Nos. 4,584,206, 4,900,110, and 5,714,199 disclose methods and apparatus for depositing a metal containing film on the bottom surface of a glass ribbon by chemical vapor deposition. Such a known apparatus can be located downstream of the molten tin bath in the float glass process to provide a functional coating on the underside of the glass ribbon, i.e., the side opposite the PE coating of the invention. Alternatively, one or more other CVD coaters can be located in the tin bath to deposit a functional coating either above or below the PE coating 24 on the float glass ribbon. In one embodiment when the functional coating is applied on the PE coating side of the substrate, the functional coating is applied in the tin bath before the PE coating. When the functional coating is on the opposite side 60 from the PE coating, the functional coating can be applied after the tin bath in the float process as discussed above, e.g., on the tin side of the substrate 22 by CVD or MSVD. In another embodiment, the PE coating 24 can be deposited over all or a portion of the surface 60 and the functional coating 46 can be deposited over all or a portion of the surface 21.

An exemplary article of manufacture of the invention is shown in Fig. 3 in the form of an insulating glass (IG) unit 30. The insulating glass unit has a first pane 32 spaced from a second pane 34 by a spacer assembly (not shown) and held in place by a sealant system to form a chamber between the two panes 32, 34. The first pane 32 has a first surface 36 (number 1 surface) and a second surface 38 (number 2 surface). The second pane 34 has a first surface 40 (number 3 surface) and a second surface 42 (number 4 surface). The first surface 36 can be the exterior surface of the IG unit, i.e., the surface exposed to the environment, and the second surface 42 can be the interior surface, i.e. the surface forming the inside of the structure. Examples of IG units are disclosed in U.S. Patent Nos. 4,193,236; 4,464,874; 5,088,258; and 5,106,663. In one embodiment shown in Fig. 3, the PE coating 24 can be positioned on the number 1 or number 4 surfaces, such as on the number 1 surface. The PE coating 24 reduces fogging and makes the IG unit 30 easier to clean and maintain. In this embodiment, one or more optional functional coatings 46 as described above can be deposited over at least a portion of the number 2, number 3, or number 4 surfaces.

Advantages of the present invention over the sol-gel method of forming self-cleaning coatings include an ability to form a thin, dense, PE film on a substrate as opposed to the generally thicker, porous self-cleaning coatings obtained with the sol-gel coating method. Because the PE coatings of the present invention can be thin, e.g., less than 1000 Å, such as less than 600 Å, they are aesthetically acceptable for use as a transparent coating on glass substrates. Still another advantage is that the method of providing a PE coating according to the present invention avoids the need to reheat the substrate after application of the coating or coating precursor as is required with the presently available sol-gel method. Not only does this render the present method less costly and more efficient, e.g., less equipment costs, less energy costs, and less production time, but also the opportunity for sodium ion migration and in turn sodium ion poisoning of the PE coating 24 of the present invention is significantly reduced. Further still, the method of the present invention is easily adapted to the formation of PE coatings on continuous moving substrates, such as a glass float ribbon, where as the presently available sol-gel methods are not so easily adaptable.

The following example of the present invention is presented for illustration and the invention is not limited thereto.

### EXAMPLE

PE coatings of titanium dioxide and selected dopants were prepared by CVD as described below to evaluate the effect of the dopants on the photoactivity of the PE coating.

PE coatings of about 600Å thickness were deposited onto 3.3 mm thick coupons of clear float glass at a temperature of 1250°F (676°C) at atmospheric pressure by a CVD coater having a commercially available Sierratherm CVD furnace. In one set of trials (Trial A) the PE coatings were deposited directly onto the glass coupons. In another set of trials (Trial B), the PE coatings were deposited on a 700Å thick tin oxide layer previously deposited onto the coupon.

In each trial, the titanium dioxide precursor material was titanium isopropoxide and the carrier gas was nitrogen. Exemplary dopant precursor materials were as follows:

| Dopant metal | Dopant precursor material |
|---|---|
| Boron | Triethyl borate |
| Strontium | Strontium isopropoxide |
| Lead | Tetra-n-butyl lead |
| Zirconium | Zirconium -2-methyl-2-butoxide |

The dopant precursor materials were added to form resultant PE coatings in which the molar ratio of the dopant metal to titanium was 0.001, 0.01, and 0.05. The concentration of the precursor composition (e.g., titanium isopropoxide and dopant precursor material) in the carrier gas was held at 0.17 volume percent for each trial.

As reference points, an undoped titania coating (600Å thick) was deposited directly onto a float glass coupon (Reference 1) and onto a coupon having a 700Å tin oxide layer (Reference 2). These undoped coatings were tested for photocatalytic activity in accordance with the conventional stearic acid test described in U.S. Patent No. 6,027,766. The following photocatalytic activity levels were determined (the "activity" levels are in units of 10⁻³ centimeter⁻¹/minute (cm⁻¹/min)) :

| Reference No. | Activity |
|---|---|
| 1 | 14 |
| 2 | 5 |

Table I below shows the activities of the PE coatings deposited directly on the glass coupons and deposited on the tin oxide layer. All values are in units of 10⁻³ centimeter⁻¹/minute. The crystal structure of the titania coating deposited directly on the glass was found to be anatase by x-ray diffraction. The crystal structure of the coating deposited on the tin oxide layer was found to contain both anatase and rutile titania.

| Table I | | | | |
|---|---|---|---|---|
| Dopant | Substrate | Molar ratio 0.001 dopant/Ti | Molar ratio 0.01 dopant/Ti | Molar ratio 0.05 dopant/Ti |
| B | Glass | 22 | 29 | 7 |
| B | Glass/SnO₂ | 10 | 12 | 7 |
| | | | | |
| Pb | Glass | 23 | 18 | 12 |
| Pb | Glass/SnO₂ | 25 | 22 | 17 |
| | | | | |
| Sr | Glass | 16 | 21 | 17 |
| Sr | Glass/SnO₂ | 3 | 14 | 8 |
| | | | | |
| Zr | Glass | 23 | 22 | 15 |
| Zr | Glass/SnO₂ | 7 | 8 | 0 |
| | | | | |
| Ta | Glass | 13 | 10 | 1 |
| Ta | Glass/SnO₂ | 8 | 4 | 2 |
| | | | | |
| W | Glass | 12 | 6 | 2 |
| W | Glass/SnO₂ | 8 | 5 | 2 |

As can be seen from Table I, B, Zr, Pb, and Sr dopants all increased photocatalytic activity of the coatings deposited directly on the glass relative to the Reference 1 at dopant/Ti molar ratios of 0.001 and 0.01. The level of photocatalytic activity dropped off from 0.01 to 0.05 dopant/Ti molar ratio.

On the other hand, W and Ta both showed lower activity levels at each dopant/Ti molar ratio tested versus Reference 1.

As also shown in Table I, with the exception of Pb, all the samples showed lower activity levels when deposited on the tin oxide layer. It appears that the ability of Pb to enhance photocatalytic activity in the presence of rutile titania suggests a different enhancement mechanism than for the other dopants.

From the disclosed trend, it is postulated that doping the titania with holes increases photocatalytic activity. This can be seen from the fact that Sr, Zr, and B all have a positive effect (increase photocatalytic activity) while Ta and W have a negative effect (decrease photocatalytic activity). A metal.having fewer valence electrons than Ti, and found at Ti sites within the crystal lattice, will hole dope the titania. Boron can be present at the oxygen sites, which would also have the effect of doping these sites as positive holes. The reverse appears true for dopants with more valence electrons. Zirconium, which has the same number of valence electrons as Ti, is still less electronegative than Ti and should, therefore, have a positive effect because of the electron withdrawing ability of oxygen. Doping the lattice with holes may make it easier for either the holes or electrons, created upon absorption of electromagnetic radiation, to move to the coating surface and react with a contaminant. Under this hypothesis, other dopants which should enhance photocatalytic activity should be La, Ba, Ca, and Hf (Hf has the same number of valence electrons as Zr but is even less electronegative).

It will be readily appreciated by those skilled in the art that modifications can be made to the invention without departing from the concepts disclosed in the foregoing description. Accordingly, the particular embodiments described in detail herein are illustrative only and are not limiting to the scope of the invention, which is to be given the full breadth of the appended claims and any and all equivalents thereof.

## Claims

1. A method of forming a photoactive coating, comprising the step of:
depositing a precursor composition over at least a portion of a substrate surface, the precursor composition comprising:
a photoactive coating precursor material; and
at least one other precursor material comprising a dopant that increases photoactivity of the photoactive coating over that of the photoactive coating without the dopant.

2. The method of claim 1, including depositing the photoactive coating by a process selected from chemical vapor deposition. magnetron sputtered vacuum deposition, and spray pyrolysis.

3. The method of claim 1, wherein the precursor composition is deposited by chemical vapor deposition over at least a portion of a float glass ribbon in a molten metal bath.

4. The method of any of the preceding claims, wherein the photoactive coating precursor material comprises a titania precursor material.

5. The method of claim 4, wherein the titania precursor material is selected from titanium alkoxide, titanium tetrachloride, and mixtures thereof.

6. The method of claim 5, wherein the titanium alkoxide is selected from titanium methoxide, titanium ethoxide, titanium tetraethoxide, titanium propoxide, titanium butoxide, isomers thereof, and mixtures thereof.

7. The method of claim 1, wherein the at least one other precursor material comprises an organometallic alkoxide.

8. The method of claim 7, wherein the at least one other precursor material comprises at least one transition metal alkoxide having a boiling point less than 200°C.

9. The method of claim 7 or 8, wherein the organometallic alkoxide is selected from the group consisting of alkoxides of boron, strontium, zirconium, lead, barium, calcium, hafnium, lanthanum, and mixtures thereof.

10. The method of claim 1, wherein the at least one other precursor material is selected from trialkyl borate, strontium alkoxide, alkyllead, zirconium alkylalkoxide, lanthanum alkoxide, strontium ethoxide, strontium-2-ethylhexanoate, strontium hexafluoroacetylacetonate, strontium isopropoxide, strontium methoxide, strontium tantalum ethoxide, strontium titanium isopropoxide, triethyl borate, tetra-n-butyl lead, zirconium-2-methyl-2-butoxide, lanthanum isopropoxide, and mixtures thereof.

11. The method of claim 4, including adding sufficient other precursor material such that a molar ratio of the dopant to titanium in the applied photoactive coating is in the range of about 0.001 to 0.05.

12. The method of any of claims 4-11, including:
heating the titania precursor material and the other precursor material to a temperature sufficient to vaporize the precursor materials: and
introducing the vaporized precursor composition into a carrier gas such that a ratio of the vaporized precursor materials to the carrier gas is in the range of 0.01 volume percent to 0.06 volume percent.

13. The method of claim 1, the precursor composition comprising titanium tetrachloride, a source of organic oxygen, and a boron containing precursor material.

14. The method of claim 13, wherein the source of organic oxygen is an alkyl ester having a C₂ to C₁₀ alkyl group.

15. The method of claim 13, wherein the precursor material comprises triethyl borate.

16. The method of any of the preceding claims, including depositing sufficient precursor composition such that the photoactive coating has a thickness in the range of about 50Å to about 2000Å.

17. The method of any of the preceding claims, including depositing the photoactive coating directly onto the substrate surface.

18. The method of any of claims 1-16, including depositing an intermediate coating between the substrate surface and the photoactive coating.

19. The method of claim 18, wherein the intermediate layer is an antireflective layer.

20. The method of claim 19, wherein the antireflective layer comprises at least one of aluminum oxide, tin oxide, indium oxide, silicon oxide, silicon oxycarbide, and silicon oxynitride.

21. The method of claim 18, wherein the intermediate layer is a sodium ion diffusion barrier layer.

22. The method of claim 21, wherein the barrier layer includes at least one of silicon oxide, silicon nitride, silicon oxynitride, silicon oxycarbide, aluminum oxide, fluorine doped aluminum oxide, and aluminum nitride.

23. The method of claim 18, wherein the intermediate coating comprises at least one of tin oxide, aluminum oxide, and zirconium oxide.

24. The method of any of the preceding claims, wherein the photoactive coating is photocatalytic.

25. The method of any of claims 1-23, wherein the photoactive coating is photoactively hydrophilic.

26. An article, comprising,
a substrate having at least one surface; and
a photocatalytic coating deposited over at least a portion of the substrate surface,
wherein the photocatalytic coating comprises titania and at least one additional material comprising at least one metal selected from boron, strontium, zirconium, lead, barium, calcium, hafnium, and lanthanum, and
wherein the additional material is present in the coating in an amount such that a molar ratio of the selected metal to titanium in the photocatalytic coating is in the range of about 0.001 to about 0.05.

27. The article of claim 26, wherein the substrate is selected from glass, plastic, and ceramic.

28. The article of claim 26, wherein the article is monolithic.

29. The article of claim 26, wherein the article is laminated.

30. The article of claim 26, wherein the article is an insulating glass unit and the substrate is at least one of the panes of the insulating glass unit.

31. The article of claim 26, wherein the substrate is selected from annealed glass, tempered glass, and heat strengthened glass.

32. The article of claim 26, wherein the article is an architectural transparency.

33. The article of claim 26, wherein the photocatalytic coating is deposited directly on the substrate surface.

34. The article of claim 26, wherein the photocatalytic coating comprises titania at least partly in the anatase phase.

35. The article of claim 26, wherein the photocatalytic coating comprises titania at least partly in the rutile phase.

36. The article of claim 26, wherein the photocatalytic coating is deposited by a process selected from chemical vapor deposition, magnetron sputtered vacuum deposition, and spray pyrolysis.

37. The article of claim 26, wherein the substrate includes at least one surface having tin diffused therein.

38. The article of claim 26, wherein the photocatalytic coating has a thickness of about 50Å to about 2000Å.

39. The article of claim 26, wherein the substrate is a float glass ribbon and the process is selected from chemical vapor deposition and spray pyrolysis.

40. The article of claim 26, including at least one intermediate layer located between the substrate surface and the photocatalytic coating.

41. The article of claim 40, wherein the intermediate layer is an antireflective layer.

42. The article of claim 40, wherein the intermediate layer is a sodium ion diffusion barrier layer.

43. The article of claim 41, wherein the antireflective layer comprises at least one of aluminum oxide, tin oxide, indium oxide, silicon oxide, silicon oxycarbide, and silicon oxynitride.

44. The article of claim 42, wherein the barrier layer comprises at least one of tin oxide, silicon oxide, titanium oxide, zirconium oxide, fluorine-doped tin oxide, aluminum oxide, magnesium oxide, zinc oxide, cobalt oxide, chromium oxide, iron oxide, and mixtures thereof.

## Patentansprüche

1. Verfahren zur Herstellung einer photoaktiven Beschichtung, umfassend die Schritte:
Abscheiden einer Vorläuferzusammensetzung auf wenigstens einem Teil einer Substratoberfläche, wobei die Vorläuferzusammensetzung enthält:
ein Vorläufermaterial für eine photoaktive Beschichtung und
wenigstens ein anderes Vorläufermaterial, das ein Dotierungsmaterial enthält, das die Photoaktivität der photoaktiven Beschichtung gegenüber der einer photoaktiven Beschichtung ohne das Dotierungsmaterial erhöht.

2. Verfahren nach Anspruch 1, das das Abscheiden der photoaktiven Beschichtung durch ein Verfahren, ausgewählt aus chemischer Dampfphasenabscheidung, Magnetron-Sputter-Vakuumabscheidung und Spray-Pyrolyse, beinhaltet.

3. Verfahren nach Anspruch 1, wobei die Vorläuferzusammensetzung durch chemische Dampfphasenabscheidung auf wenigstens einem Teil eines Floatglasbandes in einem geschmolzenen Metallbad abgeschieden wird.

4. Verfahren nach einem der vorstehenden Ansprüche, wobei das Vorläufermaterial für die photoaktive Beschichtung ein Titandioxidvorläufermaterial enthält.

5. Verfahren nach Anspruch 4, wobei das Titandioxidvorläufermaterial ausgewählt ist aus Titanalkoxid, Titantetrachlorid und Mischungen davon.

6. Verfahren nach Anspruch 5, wobei das Titanalkoxid ausgewählt ist aus Titanmethoxid, Titanethoxid, Titantetraethoxid, Titanpropoxid, Titanbutoxid, Isomeren davon und Mischungen davon.

7. Verfahren nach Anspruch 1, wobei das wenigstens eine andere Vorläufermaterial ein organometallisches Alkoxid enthält.

8. Verfahren nach Anspruch 7, wobei das wenigstens eine andere Vorläufermaterial wenigstens ein Übergangsmetallalkoxid mit einem Siedepunkt von weniger als 200°C umfasst.

9. Verfahren nach Anspruch 7 oder 8, wobei das organometallische Alkoxid ausgewählt ist aus der Gruppe bestehend aus Alkoxiden von Bor, Strontium, Zirconium, Blei, Barium, Calcium, Hafnium, Lanthan und Mischungen davon.

10. Verfahren nach Anspruch 1, wobei das wenigstens eine andere Vorläufermaterial ausgewählt ist aus Trialkylborat, Strontiumalkoxid, Bleialkyl, Zirconiumalkylalkoxid, Lanthanalkoxid, Strontiumethoxid, Strontium-2-ethylhexanoat, Strontiumhexafluoracetylacetonat, Strontiumisopropoxid, Strontiummethoxid, Strontiumtantalethoxid, Strontiumtitanisopropoxid, Triethylborat, Tetra-n-butylblei, Zirconium-2-methyl-2-butoxid, Lanthanisopropoxid und Mischungen davon.

11. Verfahren nach Anspruch 4, das Zugeben von ausreichend anderem Vorläufermaterial umfasst, so dass das molare Verhältnis des Dotierungsmittels zu Titan in der aufgebrachten photoaktiven Beschichtung im Bereich von etwa 0,001 bis 0,05 liegt.

12. Verfahren nach einem der Ansprüche 4-11 umfassend:
Erwärmen des Titandioxidvorläufermaterials und des anderen Vorläufermaterials auf eine Temperatur, die ausreicht, um die Vorläufermaterialien zu verdampfen, und
Einbringen der verdampften Vorläuferzusammensetzung in ein Trägergas, so dass das Verhältnis der verdampften Vorläufermaterialien zu dem Trägergas im Bereich von 0,01 Vol.-% bis 0,06 Vol.-% liegt.

13. Verfahren nach Anspruch 1, wobei die Vorläuferzusammensetzung Titantetrachlorid, eine Quelle von organischem Sauerstoff und ein borhaltiges Vorläufermaterial enthält.

14. Verfahren nach Anspruch 13, wobei die Quelle von organischem Sauerstoff ein Alkylester mit einer C₂- bis C₁₀-Alkylgruppe ist.

15. Verfahren nach Anspruch 13, wobei das Vorläufermaterial Triethylborat enthält.

16. Verfahren nach einem der vorstehenden Ansprüche, umfassend Abscheiden von ausreichend Vorläuferzusammensetzung, so dass die photoaktive Beschichtung eine Dicke im Bereich von etwa 50 Å bis etwa 2000 Å aufweist.

17. Verfahren nach einem der vorstehenden Ansprüche, umfassend Abscheiden der photoaktiven Beschichtung direkt auf die Substratoberfläche.

18. Verfahren nach einem der Ansprüche 1-16, umfassend Abscheiden einer Zwischenbeschichtung zwischen der Substratoberfläche und der photoaktiven Beschichtung.

19. Verfahren nach Anspruch 18, wobei die Zwischenschicht eine antireflektierende Schicht ist.

20. Verfahren nach Anspruch 19, wobei die antireflektierende Schicht wenigstens eins aus Aluminiumoxid, Zinnoxid, Indiumoxid, Siliciumoxid, Siliciumoxycarbid und Siliciumoxynitrid enthält.

21. Verfahren nach Anspruch 18, wobei die Zwischenschicht eine Natriumionendiffusionssperrschicht ist.

22. Verfahren nach Anspruch 21, wobei die Sperrschicht wenigstens eins aus Siliciumoxid, Siliciumnitrid, Siliciumoxynitrid, Siliciumoxycarbid, Aluminiumoxid, fluordotiertem Aluminumoxid und Aluminiumnitrid enthält.

23. Verfahren nach Anspruch 18, wobei die Zwischenbeschichtung wenigstens eins aus Zinnoxid, Aluminiumoxid und Zirconiumoxid enthält.

24. Verfahren nach einem der vorstehenden Ansprüche, wobei die photoaktive Schicht photokatalytisch ist.

25. Verfahren nach einem der Ansprüche 1-23, wobei die photoaktive Schicht photoaktiv hydrophil ist.

26. Gegenstand, enthaltend:
ein Substrat mit wenigstens einer Oberfläche und
eine photokatalytische Beschichtung, die auf wenigstens einem Teil der Substratoberfläche abgeschieden ist,
wobei die photokatalytische Beschichtung Titandioxid und wenigstens ein zusätzliches Material enthält, das ein Metall enthält, ausgewählt aus Bor, Strontium, Zirconium, Blei, Barium, Calcium, Hafnium und Lanthan, und
wobei das zusätzliche Material in der Beschichtung in einer Menge vorhanden ist, so dass das molare Verhältnis des ausgewählten Metalls zu Titan in der photokatalytischen Beschichtung im Bereich von etwa 0,001 bis etwa 0,05 liegt.

27. Gegenstand nach Anspruch 26, wobei das Substrat ausgewählt ist aus Glas, Kunststoff und keramischen Materialien.

28. Gegenstand nach Anspruch 26, wobei der Gegenstand monolithisch ist.

29. Gegenstand nach Anspruch 26, wobei der Gegenstand laminiert ist.

30. Gegenstand nach Anspruch 26, wobei der Gegenstand eine Isolierglaseinheit ist und das Substrat wenigstens eine der Scheiben der Isolierglaseinheit ist.

31. Gegenstand nach Anspruch 26, wobei das Substrat ausgewählt ist aus spannungsfrei gemachtem Glas, getempertem Glas und wärmegehärtetem Glas.

32. Gegenstand nach Anspruch 26, wobei der Gegenstand eine Bauverglasung ist.

33. Gegenstand nach Anspruch 26, wobei die photokatalytische Beschichtung direkt auf der Substratoberfläche aufgebracht ist.

34. Gegenstand nach Anspruch 26, wobei die photokatalytische Beschichtung Titandioxid wenigstens teilweise in der Anatasphase enthält.

35. Gegenstand nach Anspruch 26, wobei die photokatalytische Beschichtung Titandioxid wenigstens teilweise in der Rutilphase enthält.

36. Gegenstand nach Anspruch 26, wobei die photokatalytische Beschichtung durch ein Verfahren, ausgewählt aus chemischer Dampfphasenabscheidung, Magnetron-Sputter-Vacuumabscheidung und Spray-Pyrolyse, aufgebracht ist.

37. Gegenstand nach Anspruch 26, wobei das Substrat wenigstens eine Oberfläche enthält, in die Zinn eindiffundiert ist.

38. Gegenstand nach Anspruch 26, wobei die photokatalytische Beschichtung eine Dicke von etwa 50 Å bis etwa 2000 Å aufweist.

39. Gegenstand nach Anspruch 26, wobei das Substrat ein Floatglasband ist und das Verfahren ausgewählt ist aus chemischer Dampfphasenabscheidung und Spray-Pyrolyse.

40. Gegenstand nach Anspruch 26, der wenigstens eine Zwischenschicht enthält, die zwischen der Substratoberfläche und der photokatalytischen Beschichtung angeordnet ist.

41. Gegenstand nach Anspruch 40, wobei die Zwischenschicht eine antireflektierende Schicht ist.

42. Gegenstand nach Anspruch 40, wobei die Zwischenschicht eine Natriumionendiffusionssperrschicht ist.

43. Gegenstand nach Anspruch 41, wobei die antireflektierende Schicht wenigstens eins aus Aluminiumoxid, Zinnoxid, Indiumoxid, Siliciumoxid, Siliciumoxycarbid und Siliciumoxynitrid enthält.

44. Gegenstand nach Anspruch 42, wobei die Sperrschicht wenigstens eins aus Zinnoxid, Siliciumoxid, Titanoxid, Zirconiumoxid, fluordotiertem Zinnoxid, Aluminumoxid, Magnesiumoxid, Zinkoxid, Cobaltoxid, Chromoxid, Eisenoxid und Mischungen davon enthält.

## Revendications

1. Procédé de formation d'un revêtement photoactif, comprenant l'étape de dépôt d'une composition de précurseur sur au moins une partie d'une surface de substrat, la composition de précurseur comprenant : une matière de précurseur de revêtement photoactive; et au moins une autre matière de précurseur comprenant un dopant qui augmente la photoactivité du revêtement photoactif par rapport à celle du revêtement photoactif sans le dopant.

2. Procédé suivant la revendication 1, comprenant le dépôt du revêtement photoactif par un procédé choisi parmi un dépôt chimique en phase vapeur, un dépôt sous vide à pulvérisation du type à magnétron et une pyrolyse par pulvérisation.

3. Procédé suivant la revendication 1, dans lequel la composition de précurseur est déposée par dépôt chimique en phase vapeur sur au moins une partie d'un ruban de verre flotté dans un bain de métal fondu.

4. Procédé suivant l'une quelconque des revendications précédentes, dans lequel la matière de précurseur de revêtement photoactive comprend une matière de précurseur d'oxyde de titane.

5. Procédé suivant la revendication 4, dans lequel la matière de précurseur d'oxyde de titane est choisie parmi un alcoxyde de titane, le tétrachlorure de titane et leurs mélanges.

6. Procédé suivant la revendication 5, dans lequel l'alcoxyde de titane est choisi parmi le méthoxyde de titane, l'éthoxyde de titane, le tétraéthoxyde de titane, le propoxyde de titane, le butoxyde de titane, leurs isomères et leurs mélanges.

7. Procédé suivant la revendication 1, dans lequel au moins l'autre matière de précurseur comprend un alcoxyde organométallique.

8. Procédé suivant la revendication 7, dans lequel au moins l'autre matière de précurseur comprend au moins un alcoxyde de métal de transition ayant un point d'ébullition inférieur à 200°C.

9. Procédé suivant l'une ou l'autre des revendications 7 et 8, dans lequel l'alcoxyde organométallique est choisi dans le groupe comprenant les alcoxydes de bore, strontium, zirconium, plomb, baryum, calcium, hafnium, lanthane et leurs mélanges.

10. Procédé suivant la revendication 1, dans lequel au moins l'autre matière de précurseur est choisie parmi les trialkyl borates, les alcoxydes de strontium, les alkylplombs, les alkylalcoxydes de zirconium, les alcoxydes de lanthane, l'éthoxyde de strontium, le 2-éthylhexanoate de strontium, l'hexafluoroacétylacétonate de strontium, l'isopropoxyde de strontium, le méthoxyde de strontium, l'éthoxyde de strontium-tantale, l'isopropoxyde de strontium-titane, le triéthyl borate, le plomb tétra-n-butyle, le 2-méthyl-2-butoxyde de zirconium, l'isopropoxyde de lanthane et leurs mélanges.

11. Procédé suivant la revendication 4, comprenant l'addition de suffisamment d'autre matière de précurseur de telle sorte que le rapport molaire du dopant au titane dans le revêtement photoactif appliqué se situe dans la plage d'environ 0,001 à 0,05.

12. Procédé suivant l'une quelconque des revendications 4 à 11, comprenant :
le chauffage de la matière de précurseur d'oxyde de titane et de l'autre matière de précurseur à une température suffisante pour vaporiser les matières de précurseur; et
l'introduction de la composition de précurseur vaporisée dans un gaz de support de telle sorte que le rapport des matières de précurseur vaporisées au gaz de support se situe dans la plage de 0,01 % en volume à 0,06 % en volume.

13. Procédé suivant la revendication 1, la composition de précurseur comprenant du tétrachlorure de titane, une source d'oxygène organique et une matière de précurseur contenant du bore.

14. Procédé suivant la revendication 13, dans lequel la source d'oxygène organique est un ester alkylique comportant un groupe alkyle en C₂ à C₁₀.

15. Procédé suivant la revendication 13, dans lequel la matière de précurseur comprend du triéthyl borate.

16. Procédé suivant l'une quelconque des revendications précédentes, comprenant le dépôt de suffisamment de composition de précurseur de telle sorte que le revêtement photoactif ait une épaisseur dans la plage d'environ 50 Å à environ 2000 Å.

17. Procédé suivant l'une quelconque des revendications précédentes, comprenant le dépôt du revêtement photoactif directement sur la surface du substrat.

18. Procédé suivant l'une quelconque des revendications 1 à 16, comprenant le dépôt d'un revêtement intermédiaire entre la surface du substrat et le revêtement photoactif.

19. Procédé suivant la revendication 18, dans lequel la couche intermédiaire est une couche antiréfléchissante.

20. Procédé suivant la revendication 19, dans lequel la couche antiréfléchissante comprend au moins un composé parmi l'oxyde d'aluminium, l'oxyde d'étain, l'oxyde d'indium, l'oxyde de silicium, l'oxycarbure de silicium et l'oxynitrure de silicium.

21. Procédé suivant la revendication 18, dans lequel la couche intermédiaire est une couche formant barrière à la diffusion d'ions de sodium.

22. Procédé suivant la revendication 21, dans lequel la couche formant barrière comprend au moins un composé parmi l'oxyde de silicium, le nitrure de silicium, l'oxynitrure de silicium, l'oxycarbure de silicium, l'oxyde d'aluminium, l'oxyde d'aluminium dopé au fluor et le nitrure d'aluminium.

23. Procédé suivant la revendication 18, dans lequel le revêtement intermédiaire comprend au moins un composé parmi l'oxyde d'étain, l'oxyde d'aluminium et l'oxyde de zirconium.

24. Procédé suivant l'une quelconque des revendications précédentes, dans lequel le revêtement photoactif est photocatalytique.

25. Procédé suivant l'une quelconque des revendications 1 à 23, dans lequel le revêtement photoactif est photoactivement hydrophile.

26. Article, comprenant :
un substrat comportant au moins une surface; et
un revêtement photocatalytique déposé sur au moins une partie de la surface du substrat,
dans lequel le revêtement photocatalytique comprend de l'oxyde de titane et au moins une matière additionnelle comprenant au moins un métal choisi parmi le bore, le strontium, le zirconium, le plomb, le baryum, le calcium, l'hafnium et le lanthane, et
dans lequel la matière additionnelle est présente dans le revêtement en une quantité telle que le rapport molaire du métal choisi au titane dans le revêtement photocatalytique se situe dans la plage d'environ 0,001 à environ 0,05.

27. Article suivant la revendication 26, dans lequel le substrat est choisi parmi le verre, le plastique et la céramique.

28. Article suivant la revendication 26, dans lequel l'article est monolithe.

29. Article suivant la revendication 26, dans lequel l'article est stratifié.

30. Article suivant la revendication 26, dans lequel l'article est un élément de verre isolant et le substrat est au moins une des vitres de l'élément de verre isolant.

31. Article suivant la revendication 26, dans lequel le substrat est choisi parmi du verre recuit, du verre trempé et du verre trempé thermiquement.

32. Article suivant la revendication 26, dans lequel l'article est un élément transparent architectural.

33. Article suivant la revendication 26, dans lequel le revêtement photocatalytique est déposé directement sur la surface du substrat.

34. Article suivant la revendication 26, dans lequel le revêtement photocatalytique comprend de l'oxyde de titane au moins partiellement dans la phase anatase.

35. Article suivant la revendication 26, dans lequel le revêtement photocatalytique comprend de l'oxyde de titane au moins partiellement dans la phase rutile.

36. Article suivant la revendication 26, dans lequel le revêtement photocatalytique est déposé par un procédé choisi parmi un dépôt chimique en phase vapeur, un dépôt sous vide à pulvérisation du type à magnétron et une pyrolyse par pulvérisation.

37. Article suivant la revendication 26, dans lequel le substrat comprend au moins une surface dans laquelle y est diffusé de l'étain.

38. Article suivant la revendication 26, dans lequel le revêtement photocatalytique a une épaisseur d'environ 50 Å à environ 2000 Å.

39. Article suivant la revendication 26, dans lequel le substrat est un ruban de verre flotté et le procédé est choisi parmi le dépôt chimique en phase vapeur et la pyrolyse par pulvérisation.

40. Article suivant la revendication 26, comprenant au moins une couche intermédiaire positionnée entre la surface du substrat et le revêtement photocatalytique.

41. Article suivant la revendication 40, dans lequel la couche intermédiaire est une couche antiréfléchissante.

42. Article suivant la revendication 40, dans lequel la couche intermédiaire est une couche formant barrière à la diffusion d'ions de sodium.

43. Article suivant la revendication 41, dans lequel la couche antiréfléchissante comprend au moins un composé parmi l'oxyde d'aluminium, l'oxyde d'étain, l'oxyde d'indium, l'oxyde de silicium, l'oxycarbure de silicium et l'oxynitrure de silicium.

44. Article suivant la revendication 42, dans lequel la couche formant barrière comprend au moins un composé parmi l'oxyde d'étain, l'oxyde de silicium, l'oxyde de titane, l'oxyde de zirconium, l'oxyde d'étain dopé au fluor, l'oxyde d'aluminium, l'oxyde de magnésium, l'oxyde de zinc, l'oxyde de cobalt, l'oxyde de chrome, l'oxyde de fer et leurs mélanges.
